# EUROPÄISCHE PATENTSCHRIFT

(11) **EP 1 722 489 B1**
(45) Veröffentlichungstag und Bekanntmachung des Hinweises auf die Patenterteilung: **15.04.2009**
(21) Anmeldenummer: 06009033.9
(22) Anmeldetag: 02.05.2006
(51) Int. Cl.: H04B 3/56

(54) **Vorrichtung zur Kopplung von PLC-Signalen an eine Spannungsversorgungsleitung**
Apparatus for coupling communication signals in a power line
Appareil pour coupler des signaux de communication sur un ligne d'alimentation

(30) Priorität: 10.05.2005 DE 102005022270
(43) Veröffentlichungstag der Anmeldung: 15.11.2006
(73) Patentinhaber: Eichhoff GmbH, 36110 Schlitz (DE)
(72) Erfinder: Rick, Martin, Dipl.-Ing., 36110 Schlitz (DE)
(74) Vertreter: Ostriga, Sonnet, Wirths & Roche

(56) Entgegenhaltungen:
- EP-A- 0 959 569
- EP-A- 1 406 369

## Beschreibung

Die Erfindung betrifft eine Vorrichtung zur Kopplung von PLC-Signalen an eine Spannungsversorgungsleitung gemäß dem Oberbegriff des Anspruches 1.

Es ist seit geraumer Zeit bekannt, Daten oder Informationen in Form von PLC- (powerline communication)-Signalen über eine Spannungsversorgungsleitung zu übertragen. Hierfür sind Signalsende- und Empfangseinheiten vorgesehen, so genannte Modems, die an bestimmten Stellen eines Spannungsversorgungsnetzes mit diesem verbunden sind. Die Verbindung kann galvanischer, kapazitiver oder induktiver Art sein. Während die Spannungsversorgungsleitung dazu dient, elektrische Verbraucher mit Betriebsspannung, also niederfrequenter Wechselspannung, beispielsweise im Bereich einiger 10 Hz, zu versorgen, können die PLC-Signale in einem hochfrequenten Frequenzbereich aufmoduliert werden. Die vorhandenen Spannungsversorgungsleitungen können so als Übertragungsmedium für die hochfrequenten PLC-Signale verwendet werden.

Aus der DE 102 46 261 A1 der Anmelderin ist beispielsweise eine Vorrichtung zur Kopplung von PLC-Signalen an eine Spannungsversorgungsleitung bekannt, bei der die Ankopplung auf induktive Weise erfolgt. Je nachdem, ob die Spannungsversorgungsleitung eine Niederspannungs-, eine Mittelspannungs- oder eine Hochspannungsleitung ist, und je nach Ausgestaltung des Ortes, an dem die Ankopplung der PLC-Signale an die Leitung erfolgen soll, werden unterschiedliche Ankopplungsarten bevorzugt. Dabei spielen sowohl die zur Verfügung stehenden Bauräume, der Schwierigkeitsgrad der Montage, die Art und der Aufbau der Spannungsversorgungsleitung, Sicherheitserwägungen und Kostenaspekte eine Rolle. Schließlich sind auch EMV-(elektromagnetische Verträglichkeit)-Grenzwerte zu berücksichtigen.

Nach der stand der Technik EP 0 959 569 ist ein Beispiel einer Vorrichtung zur Kopplung von PLC-Signalen schon bekannt.

Eine besondere Problematik tritt auf, wenn eine Ankopplung von PLC-Signalen an eine Spannungsversorgungsleitung erfolgen soll, die einen Abschnitt aufweist, der innerhalb einer Schaltanlage verläuft. Dabei kann es sich insbesondere um eine Mittelspannungsschaltanlage handeln, die somit einen Schalter aufweist, der eine Mittelspannungsleitung, typischerweise zur Übertragung von Spannung im Bereich zwischen 1 und 36 kV, schalten oder trennen kann. Bei den bekannten Schaltanlagen kann infolge der vorgegebenen Geometrie der vorhandenen Bauteile der Schaltanlage, zu denen beispielsweise Erdleiter, Befestigungselemente, Stützerdurchführungen, Abschirmgitter, Wandelemente, Stromschiene, Schalter oder andere Bauteile gehören können, eine Leiterschleife gebildet werden. Diese Leiterschleife kann, je nachdem auf welche Art und an welchem Punkt der Leiterschleife die Ankopplung der PLC-Signale bzw. die Verbindung mit dem Modem vorgenommen wird, zu größeren Pegelverlusten und zu ungünstigen EMV-Werten führen.

Der Erfindung liegt die Aufgabe zugrunde, eine Vorrichtung gemäß dem Oberbegriff des Anspruches 1 derartig weiterzubilden, dass sie mit geringem Bauaufwand herstellbar und auf einfache Weise montierbar ist.

Die Erfindung löst diese Aufgabe mit den Merkmalen des Anspruches 1, insbesondere mit denen des Kennzeichenteils, und ist demgemäß dadurch gekennzeichnet, dass eine in ihrer Form der Leiterschleife nachgebildete Antenne vorgesehen ist, die benachbart der Leiterschleife angeordnet ist.

Das Prinzip der Erfindung besteht im Wesentlichen darin, anstelle der bekannten induktiven Ankopplung von PLC-Signalen an die Spannungsversorgungsleitung sowie anstelle der bekannten kapazitiven Ankopplung der PLC-Signale an die Spannungsversorgungsleitung nunmehr eine Antennenkopplung vorzusehen. Die in der Schaltanlage vorhandene Leiterschleife wird als erste Antenne benutzt und die gesonderte, in ihrer Form der Leiterschleife nachgebildete Antenne wird als zweite Antenne vorgesehen, wobei die beiden Antennen zusammen ein Antennensystem bilden. Jede der Antennen kann als Sendeantenne und/oder als Empfangsantenne fungieren. Für den Fall, dass eine PLC-Signal-Kopplung an die Spannungsversorgungsleitung im Sendebetrieb eines Modems erfolgen soll, wirkt die Antenne als Sendeantenne und fungiert die Leiterschleife als Empfangsantenne. Im umgekehrten Fall, in dem eine PLC-Signalankopplung an die Spannungsversorgungsleitung derart erfolgen soll, dass ein Modem PLC-Signale, die über die Spannungsversorgungsleitung übertragen werden, empfängt, fungiert die Leiterschleife als Sendeantenne und fungiert die Antenne als Empfangsantenne.

Die Antenne kann im einfachsten Falle ein ringförmig verlaufender Leiter sein, der mit dem Modem verbunden ist. Der Leiter kann vor Ort, also am Einsatz- oder Montageort in der Schaltanlage, in eine Form gebogen werden, die der Form der Leiterschleife nachgebildet ist, das heißt zu der Form der Leiterschleife im Wesentlichen identisch ist oder einer solchen Form angenähert ist. Die in der Schaltanlage vorhandene Leiterschleife ist in der Geometrie der dort vorhandenen Bauteile begründet und somit vorgegeben.

Die Leiterschleife bildet eine im Wesentlichen geschlossene Stromschleife für hochfrequente Wechselspannungen, ist aber für den niederfrequenten Strom unterbrochen. Die Leiterschleife wird von einem Abschnitt der Spannungsversorgungsleitung gebildet, an die die PLC-Signale angekoppelt werden sollen, sowie von weiteren Bauteilen der Schaltanlage. Bestandteil der Leiterschleife können demnach beispielsweise in der Schaltanlage vorhandene Schalter oder Teile eines Schalters, insbesondere eines Mittelspannungsschalters, sein. Auch elektrische Verbindungen zwischen dem Schalter und anderen Bauteilen, insbesondere in Form von Stromschienen, können Bestandteil der Leiterschleife sein. Auch so genannte Stützerdurchführungen, die im Fachjargon als Bottle bezeichnet werden und mit Öl gefüllt dauerhaft eine funktionierende elektrische Isolierung der ölgetränkten Papierschichten der Spannungsversorgungsleitung gewährleisten, können Teil der Leiterschleife sein. Schließlich sind auch Montageschienen für die Stützerdurchführung, die zugleich auch geerdet sein können, Bestandteil der Leiterschleife. Auch Wand- oder Bodenelemente der Schaltanlage, beispielsweise auch Abschirmgitter, die ebenfalls aus Metall bestehen und typischerweise geerdet sind, bilden gemeinsam mit den vorgenannten Bauteilen und dem Abschnitt der Spannungsversorgungsleitung die Leiterschleife aus.

Die Erfindung erkennt, dass aufgrund der gegebenen Geometrie einer Schaltanlage dort für hochfrequente Wechselspannung eine Leiterschleife besteht. Die vorhandene Leiterschleife macht sich die Erfindung zunutze, indem durch Anordnung einer Antenne ein Antennensystem aufgebaut wird, was mit denkbar geringem Aufwand möglich ist. Hierzu muss im einfachsten Falle die Antenne nur vor Ort, dem durch die Position der Bauteile vorgegebenen Verlauf der Leiterschleife folgend, gebogen werden und befestigt werden.

Das Funktionsprinzip des Antennensystems ist wie folgt: Wird ausgehend von dem Modem eine hochfrequente Wechselspannung an die Antenne angelegt, wird hierdurch ein elektromagnetisches Feld in Umfangsrichtung der Antenne erzeugt und abgestrahlt, welches in der Leiterschleife einen entsprechenden, in Gegenrichtung gerichteten Strom hervorruft. Das von dem Modem ausgesandte und an der Antenne anliegende PLC-Signal kann auf diese Weise, praktisch ohne Sendeverluste, auf die Spannungsversorgungsleitung angekoppelt werden, wobei der Begriff "Signalankopplung" im Sinne der Erfindung bi-direktional zu verstehen ist.

Die erfindungsgemäße Vorrichtung zur Kopplung von PLC-Signalen an eine Spannungsversorgungsleitung umfasst solche Vorrichtungen, die PLC-Signale auf eine Spannungsversorgungsleitung aufkoppeln, solche Vorrichtungen, die PLC-Signale von einer Spannungsversorgungsleitung auskoppeln und solche Vorrichtungen, die sowohl aufkoppeln als auch auskoppeln können und damit bi-direktional arbeiten können. Die unterschiedlichen, möglichen Signalübertragungsrichtungen sind unter dem Begriff "Signalankopplung" zusammengefasst.

Der zuvor beschriebene Effekt bewirkt zugleich, dass die EMV-Werte der Schaltanlage insgesamt deutlich reduziert werden, da sich die Ströme in der Leiterschleife und in der Antenne sowie die zugehörigen elektromagnetischen Felder grundsätzlich zu kompensieren versuchen.

Anzumerken ist, dass die PLC-Signale etwa in einem Frequenzbereich zwischen 2 MHz und 50 MHz liegen können. Die über die Spannungsversorgungsleitung übertragene Wechselspannung zur Versorgung von Haushalten liegt hingegen im niederfrequenten Spannungsbereich, beispielsweise einiger 10 Hz. Für diese niederfrequente Wechselspannung ist die Leiterschleife selbstverständlich nicht geschlossen und spielt bei diesen geringen Frequenzen auch überhaupt keine Rolle. Erst für Wechselspannung höherer Frequenzen, wie sie für die PLC-Signale relevant sind, stellt sich die vorhandene Leiterschleife als im Wesentlichen geschlossene Leiterschleife dar.

Gemäß einer vorteilhaften Ausgestaltung der Erfindung ist die Antenne mit einer Signalsende- oder Signalempfangseinheit verbunden. Eine derartige Signalsende- oder Signalempfangseinheit kann von einem herkömmlichen Modem bereitgestellt sein, welches beide Betriebsarten, also sowohl Sendebetrieb als auch Empfangsbetrieb durchführen kann. Die Antenne kann entweder so ausgebildet, insbesondere .geschaltet sein, dass sie sowohl einen Sende- als auch einen Empfangsbetrieb durchführen kann. Es kann auch vorgesehen sein, dass durch einen wahlweise kontaktierbaren Anschluss oder durch einen entsprechenden Schalter eine Einstellung der Antenne vorgenommen werden kann, ob sie in Sende- oder in Empfangsbetrieb arbeiten soll.

Gemäß einer weiteren vorteilhaften Ausgestaltung der Erfindung ist die Leiterschleife für hochfrequente Wechselspannungen geschlossen und für niederfrequente Wechselspannungen offen. Dies bedeutet, dass die hochfrequenten PLC-Signale entlang der Leiterschleife fließen können und auf die Spannungsversorgungsleitung aufmoduliert werden können bzw. ohne Weiteres von der Spannungsversorgungsleitung abgekoppelt werden können, ohne dass dies die Weiterleitung der niederfrequenten Wechselspannung beeinträchtigt.

Gemäß einer weiteren vorteilhaften Ausgestaltung der Erfindung verläuft die Antenne im Wesentlichen parallel zu der Leiterschleife. Dies bedeutet, dass die Antenne eine Form aufweist, die dem Verlauf der Leiterschleife im Wesentlichen folgt. Eine parallele Anordnung bedeutet zugleich auch, dass der Abstand der Antenne von der Leiterschleife entlang dem Verlauf der Antenne im Wesentlichen konstant ist. Dies ermöglicht ein Antennensystem mit geringen Sendeverlusten.

Gemäß einer weiteren vorteilhaften Ausgestaltung der Erfindung ist die Antenne in einem Abstand zwischen 4 cm und 17 cm, vorteilhafterweise- zwischen 6 cm und 15 cm zu der Leiterschleife angeordnet. Dies ermöglicht einerseits einen besonders sicheren und verlustarmen Betrieb des Antennensystems und zugleich eine hohe Durchschlagsicherheit, z.B. für den Fall, dass die Spannungsversorgungsleitung eine Mittelspannungsleitung ist. Befindet sich die Antenne in einem Abstand von weniger als etwa 10 cm zu der Leiterschleife, kann vorteilhafterweise eine Isolierung, beispielsweise nach Art eines an der Außenumfangsseite der Antenne aufbringbaren Isolierschlauches, vorgesehen werden, wohingegen bei größeren Abständen, beispielsweise oberhalb von 10 cm, auf eine elektrische Isolierung der Außenfläche der Antenne, die metallisch ausgebildet sein kann, verzichtet werden kann.

Gemäß einer weiteren vorteilhaften Ausgestaltung der Erfindung ist die Antenne von einem metallischen Rohr gebildet. Dies ermöglicht eine besonders einfache Bauform und Montage der Antenne, da das Rohr am Montageort in seine endgültige Form biegbar ist und somit in seiner Form der Leiterschleife nachgebildet werden kann. Das metallische Rohr kann beispielsweise aus Kupfer bestehen und im einfachsten Falle die Antenne darstellen. Weiter vorteilhafterweise ist das Rohr allerdings hohl ausgebildet und weist in seinem Inneren einen Leiter auf, der elektrisch von dem metallischen Rohr isoliert ist.

Gemäß einer weiteren vorteilhaften Ausgestaltung der Erfindung weist das Rohr zwei Enden auf, die sich nicht berühren. Im montierten Zustand ist das Rohr somit zu einem nicht gänzlich geschlossenen Ring geformt, wobei im Bereich der beiden offenen Enden ein Anschluss vorgesehen sein kann. Durch diese offene Stelle können die Leiter auf einfache Weise in das Innere des Rohres hinein bzw. aus dem Inneren des Rohres herausgeführt werden.

Gemäß einer weiteren vorteilhaften Ausgestaltung der Erfindung ist im Bereich der zwei Enden des Rohres wenigstens ein Anschluss, insbesondere ein Steckanschluss vorgesehen. Der Anschluss ermöglicht insbesondere eine einfache Verbindung der Antenne mit dem Modem. Die Antenne kann auf diese Weise unter Umständen auch als handhabbare Baueinheit zumindest teilweise vorgefertigt werden, was insbesondere vorteilhaft ist, wenn die Geometrie der Leiterschleife im Vorfeld bekannt ist und somit eine werkseitige Biegung des Rohres vorgenommen werden kann.

Gemäß einer weiteren vorteilhaften Ausgestaltung der Erfindung ist innerhalb des Rohres ein Leiter mit mindestens einer Windung geführt. Der Leiter ist elektrisch von dem Rohr isoliert.

Gemäß einer weiteren vorteilhaften Ausgestaltung der Erfindung ist innerhalb des Rohres ein Leiter mit zwei Windungen geführt. Dies ermöglicht eine angepasste Impedanz der Antenne an die Impedanz der Leiterschleife.

Gemäß einer weiteren vorteilhaften Ausgestaltung der Erfindung ist die Antenne richtungsneutral geschaltet. Dies bedeutet, dass die Antenne bzw. das Antennensystem aus Antenne und Leiterschleife, ohne dass irgendeine Wahl der Betriebsart vorgenommen werden muss, sowohl im Empfangsbetrieb als auch im Sendebetrieb arbeiten kann. Arbeitet die Antenne im Sendebetrieb, wird das PLC-Signal somit richtungsunabhängig in die Leiterschleife eingespeist und fließt zur Hälfte entlang der Spannungsversorgungsleitung hin zu einer anderen Schaltanlage als auch zu einem anderen etwa hälftigen Anteil über den Schalter zu einer Sammelschiene. Zwar ist bei dieser Ausführungsform der Erfindung mit ca. 50prozentigen Signalpegelverlusten zu rechnen. Andererseits kann auf Betriebswahlschalter oder gesonderte Anschlüsse verzichtet werden.

In diesem Zusammenhang sei angemerkt, dass eine Vorrichtung zur Ankopplung von PLC-Signalen, insbesondere eine erfindungsgemäße Vorrichtung mit einer Antenne, vorzugsweise bei jeder Schaltanlage eingesetzt wird, die einen Transformator aufweist, um eine Transformation der hochfrequenten PLC-Signale zu vermeiden. Somit weist ein Spannungsversorgungsnetz typischerweise in regelmäßigen Abständen, beispielsweise etwa alle 300 m bei Betrachtung einer Mittelspannungsleitung, eine Vorrichtung mit einem Verbindungspunkt für ein Modem auf.

Gemäß einer alternativen Ausgestaltung der Erfindung ist die Antenne als Richtantenne geschaltet und arbeitet entweder im Sendebetrieb oder im Empfangsbetrieb. Eine entsprechende Schaltung der Antenne als Richtantenne kann auf einfache Weise erfolgen und ermöglicht eine richtungsabhängige Einspeisung der PLC-Signale in die Spannungsversorgungsleitung beispielsweise derart, dass die PLC-Signale praktisch ausschließlich über die Spannungsversorgungsleitung hin in Richtung einer anderen Schaltanlage abfließen und nicht über den Schalter zur Sammelschiene oder zu einem Transformator. Gleichermaßen kann für den Fall, dass die Antenne im Falle einer Schaltung als Richtantenne im Empfangsbetrieb verwendet wird, dafür gesorgt werden, dass auch hier keine Pegelverluste auftreten.

Zur Wahl der gewünschten Betriebsart der Antenne können an der Antenne entweder zwei gesonderte Anschlüsse, die beispielsweise als Sendebetriebsanschluss oder Empfangsbetriebsanschluss gekennzeichnet sind, vorgesehen sein, oder alternativ ein Schalter, der z.B. manuell betätigbar sein kann und eine entsprechende Einstellung der Betriebsart zulässt.

Weitere Vorteile der Erfindung ergeben sich aus den nicht zitierten Unteransprüchen sowie anhand der nun folgenden Beschreibung der in den Zeichnungen dargestellten Ausführungsbeispiele. Darin zeigen:
- Fig. 1: ein schematisches Blockschaltbild eines Ausschnittes eines Spannungsversorgungsnetzes mit einer Hochspannungsschaltanlage und einer Mittelspannungsschaltanlage,
- Fig. 2: in einer schematischen, teilgeschnittenen Seitenansicht einen Teil einer Mittelspannungsschaltanlage gemäß Fig. 1,
- Fig. 3: in einer schematischen Darstellung drei Phasen der Mittelspannungsschaltanlage der Fig. 2 gemäß Ansichtspfeil 111 in Fig. 2,
- Fig. 4: in einer Darstellung gemäß Fig. 2 die Mittelspannungsschaltanlage mit einer erfindungsgemäßen Vorrichtung mit einer Antenne,
- Fig. 5: die Mittelspannungsschaltanlage der Fig. 4 in einer Darstellung gemäß Fig. 3,
- Fig. 6: die Antenne der Fig. 5 in schematischer Einzeldarstellung,
- Fig. 7: einen Querschnitt durch die Antenne etwa entlang Schnittlinie VII-VII in Fig. 6 in schematischer Darstellung, und
- Fig. 8: in einer schematischen blockschaltbildartigen Darstellung die Antenne und ein Modem zur Erläuterung der erfindungsgemäßen Schaltung.

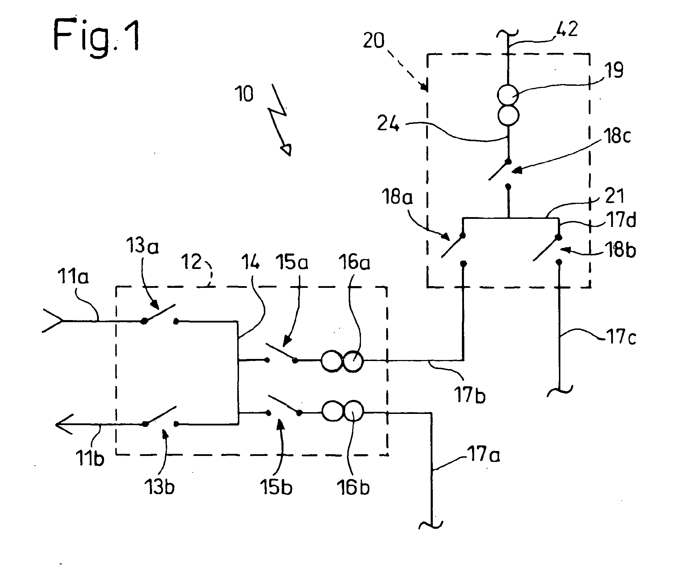

Zunächst soll anhand der Fig. 1, die lediglich sehr schematisch einen Ausschnitt aus einem insgesamt mit 10 bezeichneten Spannungsversorgungsnetz andeutet, erläutert werden, was im Rahmen der vorliegenden Erfindung unter einer Schaltanlage zu verstehen ist. Angemerkt sei schon jetzt, dass gleiche oder vergleichbare Teile oder Elemente in der nachfolgenden Figurenbeschreibung der Einfachheit und der Übersichtlichkeit halber mit gleichen Bezugszeichen, teilweise unter Hinzufügung kleiner Buchstaben bezeichnet sind.

Das Spannungsversorgungsnetz 10 dient der Versorgung von elektrischen Verbrauchern in Industrie und Haushalten mit einer Betriebsspannung einer Niederfrequenz von beispielsweise 50 Hz oder 60 Hz. Von einem nicht dargestellten Kraftwerk wird Elektrizität erzeugt, die über Hochspannungsleitungen 11 a, 11 b beispielsweise als Wechselspannung von ca. 110 kV übertragen wird. Die Hochspannungsleitungen 11a, 11b münden in eine gestrichelt dargestellte Hochspannungsschaltanlage 12, die Schalter 13a, 13b sowie 15a und 15b, gegebenenfalls Sammelschienen 14 und Transformatoren 16a, 16b aufweist, die die Hochspannung von beispielsweise 110 kV auf eine Mittelspannung im Bereich von beispielsweise 10 kV bis 36 kV herunter transformieren. Die Schalter 13a, 13b, 15a, 15b sind vorgesehen, um eine redundante Spannungsversorgung sämtlicher Teilnehmer des Spannungsversorgungsnetzes 10 zu gewährleisten, um beispielsweise Umschaltungen vornehmen zu können oder Leitungszweige zu- oder abschalten zu können, wenn Störungen, beispielsweise durch Blitzschlag oder im Rahmen von Wartungsarbeiten, auftreten. Sämtliche Schalter in Fig. 1 sind der Übersichtlichkeit halber in ihrer Offenstellung dargestellt, wobei dem Betrachter deutlich wird, dass dies eine unrealistische Betriebssituation ist, da in diesem Falle das Spannungsversorgungsnetz 10 bis auf die Hochspannungsleitungen 11a, 11 b nicht spannungsführend ist.

Eine realistische Betriebssituation könnte z.B. eintreten, wenn die Schalter 13a, 15a, 15b und die später noch zu erläuternden Schalter 18a, 18b und 18c geschlossen sind.

Die Hochspannungsschaltanlage 12 weist ausgangsseitig zwei Mittelspannungsleitungen 17a und 17b auf. Die Mittelspannungsleitung 17a ist lediglich abgebrochen dargestellt und führt zu nicht dargestellten Netzbereichen des Spannungsversorgungsnetzes 10, z.B. zu einer nicht dargestellten Schaltanlage. Die Mittelspannungsleitung 17b führt zu einer Mittelspannungsschaltanlage 20, die gemäß dem Ausführungsbeispiel der Fig. 1 Schalter 18a, 18b und 18c, eine gemeinsame Sammelschiene in Form eines Abschnittes 21 innerhalb der Schaltanlage 20 und einen Transformator 19 umfasst, der die Mittelspannung von beispielsweise 10 kV auf eine Niederspannung in Höhe von beispielsweise 0,4 kV herunter transformiert. Eine Niederspannungsleitung 42 kann beispielsweise zu den entsprechenden Haushalten zur Versorgung der elektrischen Verbraucher führen. Die Mittelspannungsschaltanlage 20 gemäß Fig. 1 kann aufgrund des Vorhandenseins des Transformators 19 auch als Ortsnetz-Transformatorstation bezeichnet werden.

Die Mittelspannungsschaltanlage 20 ist mit einer weiteren Mittelspannungsleitung 17c verbunden, die zu nicht dargestellten weiteren Mittelspannungsschaltanlagen führen kann oder zu anderen Bereichen des Netzes. Ein Abschnitt der Mittelspannungsleitung, der innerhalb der Mittelspannungsschaltanlage 20 verläuft, ist in Fig. 1 mit 17d bezeichnet und befindet sich auf der dem Schalter 18c zugewandten Seite des Schalters 18b.

Obwohl die Mittelspannungsschaltanlage 20 der Fig. 1 aufgrund des vorhandenen Transformators 19 eine Transformatorstation zeigt, bezieht sich die Erfindung aber auch auf Schaltanlagen, die keinen Transformator 19 aufweisen. Eine Schaltanlage im Sinne der Erfindung ist jede Schaltanlage für eine Spannungsversorgungsleitung, die einen Schalter aufweist, mit dem die Spannungsversorgungsleitung unterbrochen werden kann.

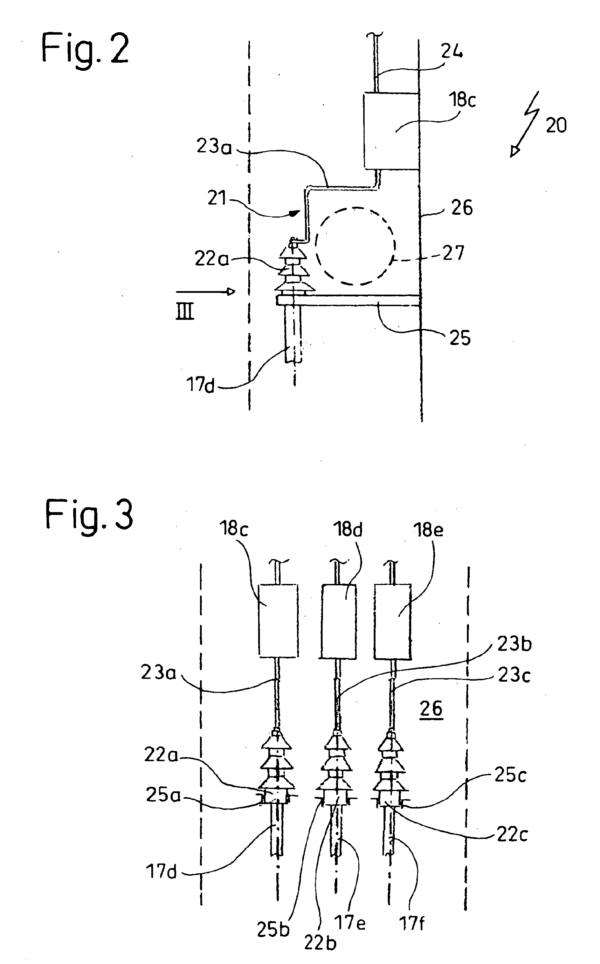

Fig. 2 verdeutlicht, wiederum sehr schematisch, aber detaillierter, einen Bereich einer Mittelspannungsschaltanlage 20 gemäß Fig. 1. Ein Teil 17d einer ankommenden Mittelspannungsleitung ist, wie dies gleichermaßen für die in Fig. 1 dargestellten Mittelspannungsleitungen 17a, 17b und 17c gilt, von einem Kabel gebildet, welches entweder eine innere Seele oder drei innere Seelen aufweist, die jeweils von ölgetränkten Papierschichten umgeben und auf diese Weise von einer metallenen, z.B. Blei oder Aluminium enthaltenden, äußeren Abschirmung isoliert sind. Die in der Schaltanlage 20 ankommende Mittelspannungsleitung 17d mündet in eine Stützerdurchführung 22a, die eine tannenbaumartige Struktur aufweist und als Bottle bezeichnet wird. Sie dient der Aufrechterhaltung der Isolierfunktion der ölgetränkten Papierschichten der Mittelspannungsleitung 17d. Hierzu weist die Bottle 22a einen Ölspeicher auf und sorgt aufgrund der Kapillarwirkung für eine dauerhafte Benetzung der Papierschichten mit Öl. Die Stützerdurchführung 22a ist über eine Montageschiene 25 an einer metallischen Rückwand 26 der Schaltanlage 20 befestigt und erdet zugleich die in Fig. 2 nicht dargestellte Abschirmung des Kabels 17d über diese Erdungsschiene 25.

Aus dem bezüglich Fig. 2 oberen Kopfbereich der Bottle 22a tritt ein Abschnitt 21 der Mittelspannungsversorgungsleitung 17d aus, der unisoliert ist und im Fachjargon als Stromschiene bezeichnet wird. Es handelt sich um einen mehrfach gegenläufig gebogenen, große Durchflussströme erlaubenden Leiter, der die innere Seele der Mittelspannungsversorgungsleitung 17d mit einem Schalter 18c verbindet, der in Fig. 2 lediglich schematisch dargestellt ist. Der Schalter 18c kann zwischen einem in Fig. 1 dargestellten offenen Zustand und einem in Fig. 1 nicht dargestellten geschlossenen Zustand geschaltet werden. Im geschlossenen Zustand verbindet der Schalter 18c den Abschnitt 21 der Mittelspannungsleitung 17d über eine Zuleitung 24 mit einer in den Figuren 1 und 2 nicht dargestellten Sammelschiene der Schaltanlage 20 oder beispielsweise auch mit dem Transformator 19 gemäß Fig. 1.

Die in Fig. 2 dargestellte Geometrie der Bauteile 22a, 25, 26, 18c, 21 und 23a der Mittelspannungsschaltanlage 20 ist vorgegeben und dient in herkömmlicher Weise der Befestigung eines Endes 17d einer Mittelspannungsleitung, der Anbindung und Befestigung sowie der Erdung einer Bottle 22a und der spannungs- und stromfesten Verbindung der Seele, das heißt dem Phasenleiter, der Mittelspannungsleitung mit einem Schalter 18c.

Fig. 2 verdeutlicht, dass die Bauteile 25, 26, 18c, 23a bzw. 21 und 22a in erster Näherung einen Ring darstellen. Dieser stellt für hochfrequenten Wechselstrom einen geschlossenen Stromkreis dar. Dieser Stromkreis ist in Fig. 2 als mit 27 bezeichnete Leiterschleife angedeutet.

Zum besseren Verständnis sei darauf hingewiesen, dass die Montageschiene 25 und die Rückwand 26 geerdet und insoweit mit der Abschirmung der Mittelspannungsversorgungsleitung 17d verbunden sind, wohingegen der Schalter 18c und der Abschnitt 21 mit dem Phasen leiter der Mittelspannungsversorgungsleitung 17d verbunden sind.

Fig. 3 zeigt in einer gleichermaßen lediglich sehr schematischen Darstellung einen Bereich der Mittelspannungsschaltanlage 20 gemäß Fig. 2, etwa gemäß Ansichtspfeil III in Fig. 2. Aus dieser Darstellung wird deutlich, dass typischerweise, aber nicht zwingend, in einer Mittelspannungsschaltanlage 20 drei Phasen einer Mittelspannungsversorgungsleitung 17 geschaltet sind. Möglich ist dabei, dass eine einzige Mittelspannungsversorgungsleitung 17 eine gemeinsame Abschirmung und drei innere Seelen, das heißt drei Phasenleiter aufweist. Alternativ ist auch möglich, dass zu einer Mittelspannungsschaltanlage 20 drei gesonderte Mittelspannungsleitungen 17d, 17e und 17f führen, wie dies Fig. 3 andeutet.

Fig. 3 zeigt, dass drei Enden von Mittelspannungsversorgungsleitungen 17d, 17e und 17f, jeweils enthaltend eine einzige Phase und eine eigene, nicht dargestellte Abschirmung, über gesonderte Stützerdurchführungen 22a, 22b und 22c, die jeweils eine eigene Montageschiene 25a, 25b und 25c aufweisen, über eigene Stromschienen 23a, 23b, 23c mit einem zugehörigen Schalter 18c, 18d und 18e verbunden sind. Mithin befinden sich drei Anordnungen gemäß Fig. 2 nebeneinander bzw. bei Betrachtung der Blickrichtung der Fig. 2 hintereinander.

Die Ankopplung von PLC-Signalen an die Spannungsversorgungsleitung 17d bzw. an den Abschnitt 21 der Spannungsversorgungsleitung 17d, der innerhalb der Mittelspannungsschaltanlage 20 verläuft, bereitet nun nicht unerhebliche Probleme. Grundsätzlich könnte z.B. eine kapazitive Ankopplung unmittelbar an die unisolierte Stromschiene 23a erfolgen. Gleichermaßen könnte auch ein induktiver Koppler unmittelbar an der Stromschiene 23a angebracht werden. Beide Möglichkeiten führen aber einerseits zu einem relativ schlechten Hochfrequenzverhalten und bedürfen andererseits auch einer spannungsfesten Auslegung bis 60 kV sowie, im Falle eines induktiven Kopplers, einer großen Robustheit gegenüber Betriebsströmen von 400 A bis 600 A und Stromstößen von bis zu 20 kA.

Außerdem treten Probleme auf, weil sich die Übertragungseigenschaft in Abhängigkeit von der Schalterstellung des Schalters 18c ändern kann.

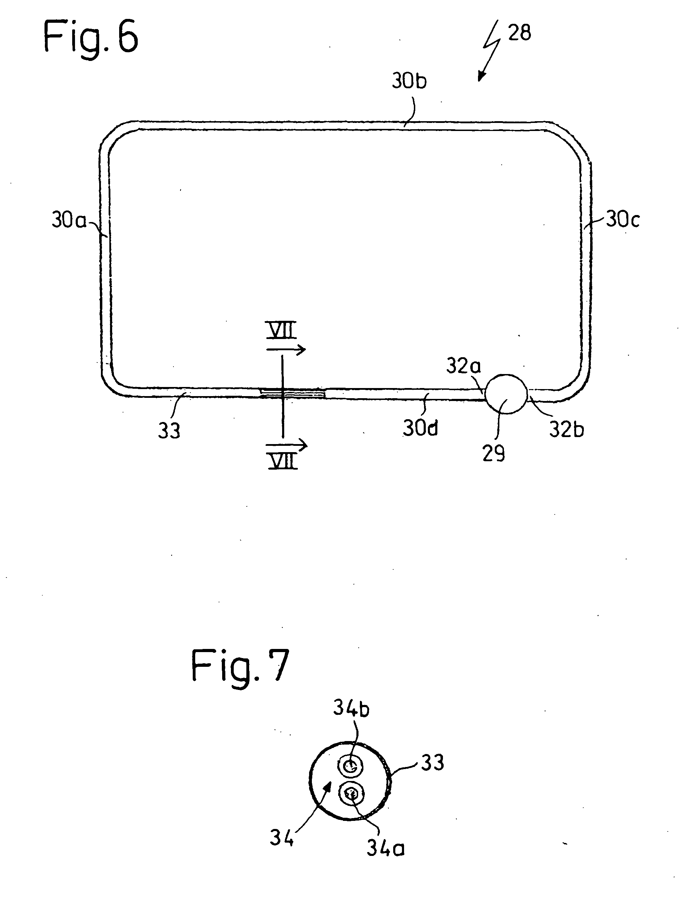

Die erfindungsgemäße Lösung sieht nun eine in Fig. 6 verdeutlichte Vorrichtung mit einem nur sehr schematisch dargestellten, erfindungsgemäßen Antennenelement 28 vor, welches im Wesentlichen rechteckförmig gebogen ist und vier Rahmenschenkel 30a, 30b, 30c und 30d aufweist. Das Antennenelement 28 besteht aus einem metallischen, beispielsweise aus Kupfer bestehenden, Rohr, welches innen hohl ist und welches, wie erst später erläutert wird, innenseitig angeordnet einen Leiter aufweist. Das metallische Rohr weist zwei Enden 32a, 32b auf, die voneinander beabstandet sind und in dem Beabstandungsbereich einen Anschluss 29 bereitstellen, worauf ebenfalls erst später eingegangen wird.

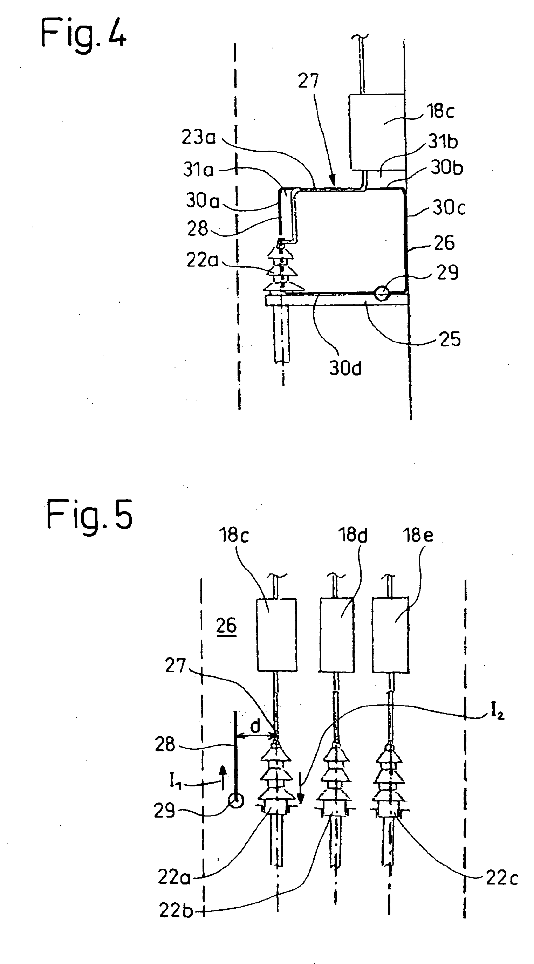

Zunächst soll anhand der Fig. 4 verdeutlicht werden, dass die Antenne 28 eine Form aufweist, die der Form der vorhandenen Leiterschleife 27 in der Mittelspannungsschaltanlage 20 angenähert ist. Fig. 4 zeigt in einer Darstellung gemäß Fig. 2 die Mittelspannungsschaltanlage 20, bei der zusätzlich das Antennenelement 28 gezeigt ist. Dieses ist fest relativ zu der Schaltanlage 20 angebracht und weist einen Verlauf auf, der an den Verlauf der Leiterschleife 27 angenähert ist. Es wird deutlich, dass der Rahmenschenkel 30d der Antenne 28 parallel zu der geerdeten Montageschiene 25 verläuft. Der Vertikalschenkel 30c der Antenne 28 verläuft parallel zu dem Abschnitt der Rückwand 26 der Schaltanlage 20. Der Rahmenschenkel 30b der Antenne 28 verläuft angenähert parallel zu dem Schalter 18c und parallel zu einem Abschnitt der Stromschiene 23a, wobei lediglich ein Abweichungsbereich 31d besteht, in dem die Kontur der Antenne 28 geringfügig von der Kontur der Leiterschleife 27 abweicht. Der vertikale Rahmenschenkel 30a der Antenne 28 verläuft gleichermaßen im Wesentlichen parallel zu der Leiterschleife 27, wobei im Bereich der Schutzdurchführung 22a ein nahezu identischer Verlauf erreicht wird und im Bereich des vertikalen Abschnittes der Stromschiene 23a ein Abweichungsbereich 31a entsteht, in dem eine gewisse, geringe Abweichung des Konturverlaufes besteht.

Bei Betrachtung der Fig. 2 wird deutlich, dass die Form der Antenne 28 der Form der vorhandenen Leiterschleife 27 sehr nahe kommt bzw. nahezu identisch zu der vorgegebenen Geometrie ist. Der von der Antenne 28 umschlossene Flächeninhalt sowie der von der Leiterschleife 27 umschlossene Flächeninhalt beträgt etwa zwischen 0,1 m² und 1 m², vorzugsweise zwischen 0,25 m² und 0,5 m².

Das Metallrohr 33 kann auf seiner Außenseite mit einem spannungsfesten lsolierschlauch als durchschlagsfeste und durchschlagverhindernde Isolierung versehen sein oder, bei ausreichendem Abstand der Antenne 28 zu der Leiterschleife 27, auch blank gehalten sein. Fig. 5 verdeutlicht, dass ein Abstand d zwischen der Antenne 28 und der Leiterschleife 27 besteht, wobei der Abstand d vorzugsweise zwischen 6 cm und 15 cm gewählt wird.

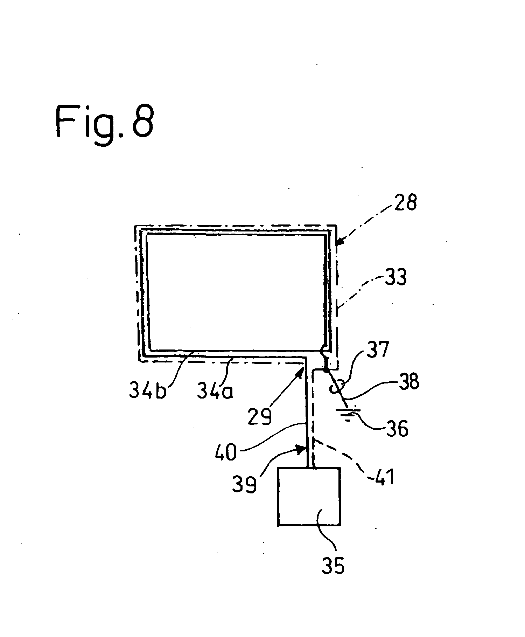

Anhand der Figuren 7 und 8 soll nun die erfindungsgemäße Beschaltung der Antenne erläutert werden:

Fig. 7 zeigt, dass das Metallrohr 33 im Inneren hohl ausgebildet ist und zur Aufnahme eines Leiters bzw. bei dem Ausführungsbeispiel zur Aufnahme zweiter Windungen 34a und 34b eines Leiters 34 dient. Die beiden Windungen 34a, 34b des Leiters 34 sind isoliert.

Fig. 8 zeigt die Antenne 28 bzw. das metallische Rohr 33 in gestrichpunkteter Darstellung. Die Antenne 28 ist über einen Anschluss 29 mit einem Modem 35, beispielsweise über eine Koaxialleitung 39, verbunden. Die Beschaltung ist derart gewählt, dass die innere Seele 40 des Koaxialkabels 39 die erste Windung 34a des innerhalb des Rohres 33 verlaufenden Leiters 34 darstellt und die Abschirmung 41 des Koaxialkabels 39 mit dem entsprechenden Ende der zweiten Windung 34b des Leiters 34 verbunden ist. Zugleich ist die zweite Windung 34b über einen massiven Erdleiter 38 mit der Masse 36 verbunden. Eine Drossel 37 sorgt für eine hochfrequente Trennung, so dass die hochfrequenten Signale nicht zur Masse 36 abfließen.

Fig. 5 deutet an, dass für den Fall, dass in der Antenne 28 ein erster Strom l₁ erzeugt wird, infolge der elektromagnetischen Kopplung in der Leiterschleife 27 ein entgegengerichteter Strom l₂ erzeugt wird. Die aus den beiden Strömen l₁ und l₂ verursachten elektromagnetischen Felder um die beiden Leiter (Antenne 28 und Leiterschleife 27) herum kompensieren sich im Wesentlichen zu Null, so dass die EMV-Werte der Mittelspannungsschaltanlage 20 insgesamt sehr gering gehalten werden können. Die EMV-Werte einer herkömmlichen Schaltanlage 20 können auf diese Weise deutlich reduziert werden, da die auftretenden Feldstärken viel geringer sind. Andererseits entsteht zwischen der Antenne 28 und der Leiterschleife 27 eine Kopplung, so dass von dem Modem 35 (Fig. 8) auf die Antenne 28 aufgespielte hochfrequente PLC-Signale durch diese Kopplung unmittelbar auf die Leiterschleife 27 und damit auf die Spannungsversorgungsleitung 17d aufmoduliert werden.

Anzumerken ist, dass das Metallrohr 33 über die hochbelastbare Erdleitung 38 geerdet ist. Die zwei Windungen 34a, 34b des Leiters 34 innerhalb des Metallrohres 33 sind vorgesehen, da sich hieraus rechnerisch ein ungefährer Widerstand von 50 Ohm ergibt, der dem Widerstand der Stromschleife 27 entspricht, so dass eine Impedanzanpassung zur Minimierung von Pegelverlusten erreicht wird.

Der Anschluss 29 kann, was in Fig. 8 nicht dargestellt ist, auch als Steckanschluss ausgebildet sein und beispielsweise zwei BNC-Steckkontaktbuchsen nach Art eines Bajonettverschlusses aufweisen. Das Modem 35 kann über das Koax-Kabel 39 auf diese Weise denkbar einfach mit der Antenne 28 verbunden werden.

Die Schaltung der Antenne 28 gemäß Fig. 8 ermöglicht eine richtungsunabhängige Ankopplung von PLC-Signalen an den Abschnitt 21 der Spannungsversorgungsleitung 17d. Eine richtungsabhängige Kopplung kann erreicht werden, wenn die Anschlüsse der Seele 40 und der Abschirmung 41 des Koaxialkabels getauscht werden.

Der Anschlusseinheit 29 kann dann auch ein Schalter zugeordnet sein, der eine Umschaltung in den gewünschten Betrieb (Sendebetrieb oder Empfangsbetrieb) der Antenne ermöglicht. Gleichermaßen können auch zwei BNC-Steckbuchsen vorgesehen sein, so dass das Modem 35 durch Wahl der gewünschten Steckbuchse in die gewünschte Betriebsart schaltbar ist.

Anzumerken ist, dass die Länge des Metallrohres 33 der Antenne 28 ungefähr in der Größe der Wellenlänge der PLC-Signale liegt. Die Vertikal-Rahmenschenkel 30a und 30c der Antenne 28 können beispielsweise eine Länge von 15 cm und die horizontalen Rahmenschenkel 30b und 30d der Antenne 28 können beispielsweise eine Länge von 20 cm aufweisen, wobei dies lediglich ungefähre Maßangaben sind, die beispielhaft zu verstehen sind.

Die in Fig. 2 erläuterte Leiterschleife 27 kann in Abhängigkeit von der gegebenen tatsächlichen Situation in der Schaltanlage 20, auch von anderen Bauteilen gebildet sein. So kann beispielsweise die Montageschiene 25 für die Bottle 22a gemäß Fig. 2 auch durch einen massiven Metallboden ersetzt sein. Die Metallwand 26 kann gleichermaßen entweder massiv ausgebildet oder von einem Drahtgitter gebildet sein.

Der Einspeisepunkt in Form des Anschlusses 29 kann zwar an beliebiger Stelle der Antenne 28 platziert sein. Vorteilhafterweise ist dieser aber aus Sicherheitsgründen sowie aus Praktikabilitätsgründen möglichst weit beabstandet von der Bottle 22a angeordnet.

Die erfindungsgemäße Ankopplung von PLC-Signalen über eine Antenne 28 an die bestehende Leiterschleife 27 der Schaltanlage 20 ist insgesamt unanfällig für die Stellung des Mittelspannungsschalters 18c und kann insoweit eine dauerhafte PLC-Signalankopplung gewährleisten. Im Falle einer richtungsabhängigen Einstrahlung der PLC-Signale über die Antenne 28 in die Mittelspannungsversorgungsleitung 17d können die elektrischen Bauteile der Schaltanlage 20 auf der der Bottle 22a abgewandten Seite des Schalters 18c gemäß Fig. 2 von Hochfrequenz-Signalen entlastet werden. Auch dies trägt zur Minderung der EMV-Werte bei.

Eine Biegung des Rohres 33 findet vor Ort statt, so dass eine optimale Anpassung der Rahmenform der Antenne 28 an die vorhandene Geometrie der Leiterschleife 27 erfolgen kann. Weiter vorzugsweise wird das metallische Rohr 33 erst dann mit dem Leiter 34 bzw. mit den Windungen 34a, 34b des Leiters 34 bestückt, wenn das Rohr 33 bereits vor Ort gebogen ist. Hierfür können bekannte Einfädelhilfen verwendet werden. Dabei besteht auch die Möglichkeit, die beiden Windungen 34a, 34b des Leiters 34a gemeinsam, in unverbundenem Zustand als zwei Leiterabschnitte, durch das Rohr 33 hindurchzuführen und erst nachfolgend entsprechend anzuschließen.

Eine Schaltanlage 20, die mit der erfindungsgemäßen Vorrichtung zur Ankopplung von PLC-Signalen versehen ist, kann unterschiedliche Schalter 18c aufweisen, die manuell oder alternativ auch motorisch betätigbar sind. Es kann sich dabei um Strahlennetz-Schalter oder Ringschalter, je nach Art der Schaltung der Mittelspannungsversorgungsleitung 17, handeln. Es können sowohl Trennschalter als auch Leistungsschalter sein.

Ergänzend sei angemerkt, dass die in den Figuren 2 bis 5 schematisch dargestellten Schaltanlagen 20 an einer beliebigen Stelle eines Spannungsversorgungsnetzes 10 gemäß Fig. 1 angeordnet sein können. Der in Fig. 2 mit 18c bezeichnete Schalter kann beispielsweise auch ein in Fig. 1 mit 18a oder mit 18b bezeichneter Schalter sein. Zu der Leiterschleife 27 der Schaltanlage 20 können auch mehrere Schalter gehören.

Die erfindungsgemäße Vorrichtung umfasst zunächst die Antenne 28, die bei dem nicht dargestellten Ausführungsbeispiel auch nur aus einem einfachen, in Ringform gebogenen Leiter stehen kann. Die erfindungsgemäße Vorrichtung kann auch einen antennenseitigen Anschluss 29, sowie gegebenenfalls ein Verbindungskabel 39, sowie weiter gegebenenfalls auch ein Modem 35 umfassen.

Im Falle einer drei Phasenleiter 17d, 17e, 17f aufweisenden Mittelspannungsschaltanlage 20, wie dies Fig. 3 zeigt, ist vorzugsweise vorgesehen, dass lediglich eine Phase 17d der Mittelspannungsleitung mit PLC-Signalen beaufschlagt wird, so dass die beiden anderen Mittelspannungsleitungen 17e und 17f keine PLC-Signale übertragen. Bei einem nicht dargestellten Ausführungsbeispiel können aber auch mehrere Antennen 28 in einer Mittelspannungsschaltanlage 20 zur Ankopplung von PLC-Signalen an mehrere Phasen-Leiter einer Mittelspannungsleitung 17 oder an unterschiedliche Mittelspannungsleitungen 17d, 17e, 17f vorgesehen sein.

## Patentansprüche

1. Vorrichtung zur Kopplung von PLC-Signalen an eine Spannungsversorgungsleitung (17d), die einen Abschnitt (21) aufweist, der innerhalb einer Schaltanlage (20), insbesondere innerhalb einer Mittelspannungsschaltanlage, verläuft, und der gemeinsam mit anderen elektrisch leitenden Bauteilen der Schaltanlage, wie Erdleitern (25), Befestigungselementen, Stützerdurchführungen (22a), Abschirmgittern, Wandelementen (26), Stromschienen (23a), Schaltern (18c) eine Leiterschleife (27) bildet, **dadurch gekennzeichnet, dass** eine in ihrer Form der Leiterschleife (27) nachgebildete Antenne (28) vorgesehen ist, die benachbart der Leiterschleife angeordnet ist.

2. Vorrichtung nach Anspruch 1, **dadurch gekennzeichnet, dass** die Antenne (28) mit einer Signalsende- und/oder Signalempfangseinheit (35) verbunden ist.

3. Vorrichtung nach Anspruch 1 oder 2, **dadurch gekennzeichnet, dass** die Leiterschleife (27) für hochfrequente Wechselspannungen geschlossen ist.

4. Vorrichtung nach einem der Ansprüche 1 bis 3, **dadurch gekennzeichnet, dass** die Leiterschleife (27) für niederfrequente Wechselspannungen offen ist.

5. Vorrichtung nach einem der vorgenannten Ansprüche, **dadurch gekennzeichnet, dass** die Antenne (28) im Wesentlichen parallel zu der Leiterschleife (27) verläuft.

6. Vorrichtung nach einem der vorgenannten Ansprüche, **dadurch gekennzeichnet, dass** die Antenne (28) unter einem Abstand (d) zwischen 4 und 17 cm zu der Leiterschleife (27) angeordnet ist.

7. Vorrichtung nach Anspruch 6, **dadurch gekennzeichnet, dass** die Antenne (28) unter einem Abstand (d) zwischen 6 und 15 cm zu der Leiterschleife (27) angeordnet ist.

8. Vorrichtung nach einem der vorgenannten Ansprüche, **dadurch gekennzeichnet, dass** die Antenne (28) von einem metallischen Rohr (33) gebildet ist.

9. Vorrichtung nach Anspruch 8, **dadurch gekennzeichnet, dass** das Rohr (33) am Montageort in seine endgültige Form (Fig. 6) biegbar ist.

10. Vorrichtung nach Anspruch 8 oder 9, **dadurch gekennzeichnet, dass** das Rohr (33) zwei Enden (32a, 32b) aufweist, die sich nicht berühren.

11. Vorrichtung nach Anspruch 10, **dadurch gekennzeichnet, dass** im Bereich der zwei Enden (32a, 32b) wenigstens ein Anschluss (29), z.B. ein Steckanschluss, insbesondere für die Signaleinspeisung, vorgesehen ist.

12. Vorrichtung nach einem der Ansprüche 8 bis 11, **dadurch gekennzeichnet, dass** das Rohr (33) auf seiner Außenseite isoliert ausgebildet, insbesondere mit spannungsfestern Isolierschlauch versehen ist.

13. Vorrichtung nach einem der Ansprüche 8 bis 11, **dadurch gekennzeichnet, dass** das Rohr (33) auf seiner Außenseite unisoliert ist.

14. Vorrichtung nach einem der Ansprüche 8 bis 13, **dadurch gekennzeichnet, dass** innerhalb des Rohres (33) ein Leiter (34) mit mindestens einer Windung (34a, 34b) geführt ist.

15. Vorrichtung nach Anspruch 14, **dadurch gekennzeichnet, dass** innerhalb des Rohres (33) ein Leiter (34) mit zwei Windungen geführt (34a, 34b) ist.

16. Vorrichtung nach einem der vorgenannten Ansprüche, **dadurch gekennzeichnet, dass** die Antenne (28) richtungsneutral geschaltet ist (Fig. 8).

17. Vorrichtung nach einem der Ansprüche 1 bis 15, **dadurch gekennzeichnet, dass** die Antenne (28) als Richtantenne geschaltet ist, und entweder im Sendebetrieb oder im Empfangsbetrieb arbeitet.

18. Vorrichtung nach Anspruch 17, **dadurch gekennzeichnet, dass** zur Wahl der gewünschten Betriebsart der Antenne (28) zwei Anschlüsse an der Antenne vorgesehen sind.

19. Vorrichtung nach Anspruch 17, **dadurch gekennzeichnet, dass** zur Wahl der gewünschten Betriebsart der Antenne (28) ein Schalter vorgesehen ist.

## Claims

1. Device for coupling PLC signals to a voltage supply line (17d), which has a section (21) which runs within a switchgear (20), in particular within a medium-voltage switchgear, and forms a conductor loop (27) together with other electrically conductive components of the switchgear, such as earth wires (25), fastening elements, support feedthroughs (22a), shield grids, wall elements (26), current buses (23a), switches (18c), **characterised in that** an antenna (28) is provided, whose shape follows that of the conductor loop (27) and is arranged adjacent to the conductor loop.

2. Device according to Claim 1, **characterised in that** the antenna (28) is connected to a signal transmitting and/or signal receiving unit (35).

3. Device according to Claim 1 or 2, **characterised in that** the conductor loop (27) is closed for highfrequency alternating voltages.

4. Device according to one of Claims 1 to 3,
**characterised in that** the conductor loop (27) is open for low-frequency alternating voltages.

5. Device according to one of the preceding claims, **characterised in that** the antenna (28) runs essentially parallel to the conductor loop (27).

6. Device according to one of the preceding claims, **characterised in that** the antenna (28) is arranged at a distance (d) of between 4 and 17 cm from the conductor loop (27).

7. Device according to Claim 6, **characterised in that** the antenna (28) is arranged at a distance (d) of between 6 and 15 cm from the conductor loop (27).

8. Device according to one of the preceding claims, **characterised in that** the antenna (28) is formed by a metallic tube (33).

9. Device according to Claim 8, **characterised in that** the tube (33) is flexible in its final form (Fig. 6) at the site of installation.

10. Device according to Claim 8 or 9, **characterised in that** the tube (33) has two ends (32a, 32b) which do not touch.

11. Device according to Claim 10, **characterised in that** at least one connection (29), for example a plug-in connection, in particular for feeding in the signal, is provided in the region of the two ends (32a, 32b).

12. Device according to one of Claims 8 to 11, **characterised in that** the tube (33) is configured to be insulated on its outer side, is in particular provided with voltage-proof insulating hose.

13. Device according to one of Claims 8 to 11, **characterised in that** the tube (33) is configured to be uninsulated on its outer side.

14. Device according to one of Claims 8 to 13, **characterised in that** a conductor (34) with at least one winding (34a, 34b) is routed within the tube (33).

15. Device according to Claim 14, **characterised in that** a conductor (34) with two windings (34a, 34b) is routed within the tube (33).

16. Device according to one of the preceding claims, **characterised in that** the antenna (28) is connected in a directionally neutral manner (Fig. 8).

17. Device according to one of Claims 1 to 15, **characterised in that** the antenna (28) is connected as a directional antenna and operates either in transmission mode or reception mode.

18. Device according to Claim 17, **characterised in that** two connections are provided on the antenna (28) for selecting the desired operating mode of the antenna.

19. Device according to Claim 17, **characterised in that** a switch is provided for selecting the desired operating mode of the antenna (28).

## Revendications

1. Dispositif de couplage de signaux de programmation logique avec contraintes (PLC) à un câble d'alimentation en tension (17d), qui présente un tronçon (21), qui s'étend à l'intérieur d'une installation de distribution électrique (20), notamment à l'intérieur d'une installation de distribution électrique à moyenne tension, et qui forme une boucle conductrice (27) en commun avec d'autres composants conducteurs d'électricité de l'installation de distribution électrique, comme des câbles de mise à la terre (25), des éléments de fixation, des passages de montants (22a), des grilles de blindage, des éléments de paroi (26), des rails conducteurs (23a), des interrupteurs (18c), **caractérisé en ce que** une antenne (28) émulant dans sa forme celle de la boucle conductrice (27) est prévue, laquelle est disposée au voisinage de la bouche conductrice.

2. Dispositif selon la revendication 1, **caractérisé en ce que** l'antenne (28) est reliée à une unité d'émission de signaux et/ou de réception de signaux (35).

3. Dispositif selon la revendication 1 ou 2, **caractérisé en ce que** la boucle conductrice (27) est fermée pour des tensions alternatives à haute fréquence.

4. Dispositif selon une des revendications 1 à 3, **caractérisé en ce que** la boucle conductrice (27) est ouverte pour des tensions alternatives à basse fréquence.

5. Dispositif selon une des revendications précédentes, **caractérisé en ce que** l'antenne (28) s'étend essentiellement parallèlement à la boucle conductrice (27).

6. Dispositif selon une des revendications précédentes, **caractérisé en ce que** l'antenne (28) est disposée à un espacement (d) compris entre 4 et 17 cm par rapport à la boucle conductrice (27).

7. Dispositif selon la revendication 6, **caractérisé en ce que** l'antenne (28) est disposée à un espacement (d) compris entre 6 et 15 cm par rapport à la boucle conductrice (27).

8. Dispositif selon une des revendications précédentes, **caractérisé en ce que** l'antenne (28) est formée par un tube métallique (33).

9. Dispositif selon la revendication 8, **caractérisé en ce que** le tube (33) peut être recourbé sur le site de montage en sa forme définitive (Fig.6).

10. Dispositif selon la revendication 8 ou 9, **caractérisé en ce que** le tube (33) présente deux extrémités (32a,32b), qui ne se contactent pas.

11. Dispositif selon la revendication 10, **caractérisé en ce que** au niveau des deux extrémités (32a,32b) au moins un raccord, par ex. un raccord enfichable, notamment pour alimenter des signaux, est prévu.

12. Dispositif selon une des revendications 8 à 11, **caractérisé en ce que** le tuyau (33) est isolé sur sa face externe, notamment est pourvu d'un tuyau flexible isolant résistant aux tensions.

13. Dispositif selon une des revendications 8 à 11, **caractérisé en ce que** le tuyau (33) n'est pas isolé sur sa face externe.

14. Dispositif selon une des revendications 8 à 13, **caractérisé en ce que** un conducteur (34) comportant au moins un enroulement (34a,34b) est guidé à l'intérieur du tuyau (33).

15. Dispositif selon la revendication 14, **caractérisé en ce que** un conducteur (34) comportant deux enroulements (34a,34b) est guidé à l'intérieur du tuyau (33).

16. Dispositif selon une des revendications précédentes, **caractérisé en ce que** l'antenne (28) est branchée en direction neutre (Fig.8).

17. Dispositif selon une des revendications 1 à 15, **caractérisé en ce que** l'antenne (28à) est configurée comme une antenne directive, et fonctionne soit en mode émetteur, soit en mode récepteur.

18. Dispositif selon la revendication 17, **caractérisé en ce que** afin de sélectionner le mode de fonctionnement souhaité de l'antenne (28), deux raccords sont prévus sur l'antenne.

19. Dispositif selon la revendication 17, **caractérisé en ce que** afin de sélectionner le mode de fonctionnement souhaité de l'antenne (28), un interrupteur est prévu.
